# EUROPEAN PATENT SPECIFICATION

(11) **EP 1 169 159 B1**
(45) Date of publication and mention of the grant of the patent: **25.02.2004**
(21) Application number: 00922568.1
(22) Date of filing: 29.03.2000
(51) Int. Cl.: B23Q 17/24, G01B 21/04

(54) **SYSTEM AND METHOD FOR CERTIFICATION OF THE POSITION OF A TOOL IN A MACHINE TOOL**
SYSTEM UND VERFAHREN ZUM NACHPRÜFEN DER POSITION EINES WERKZEUGES EINER WERKZEUGMASCHINE
SYSTEME ET PROCEDE DE CERTIFICATION DE LA POSITION D'UN OUTIL DANS UNE MACHINE OUTIL

(30) Priority: 01.04.1999 IT TO990255
(43) Date of publication of application: 09.01.2002
(73) Proprietor: FIDIA S.P.A., 10099 San Mauro Torinese (Torino) (IT)
(72) Inventor: MIGNANI, Augusto, D-60529 Frankfurt/Main (DE)
(74) Representative: Quinterno, Giuseppe
(86) International application number: PCT/EP2000/002774
(87) International publication number: WO 2000/059677

(56) References cited:
- EP-A- 0 834 378
- US-A- 5 741 096
- US-A- 5 778 548
- US-A- 5 880 847
- PATENT ABSTRACTS OF JAPAN vol. 1998, no. 10, 31 August 1998 (1998-08-31) & JP 10 138097 A (MAKINO MILLING MACH CO LTD), 26 May 1998 (1998-05-26)
- PATENT ABSTRACTS OF JAPAN vol. 017, no. 284 (M-1421), 31 May 1993 (1993-05-31) & JP 05 016059 A (TOYODA MACH WORKS LTD), 26 January 1993 (1993-01-26)
- PATENT ABSTRACTS OF JAPAN vol. 011, no. 082 (M-571), 12 March 1987 (1987-03-12) & JP 61 236462 A (YAMAZAKI MAZAK CORP), 21 October 1986 (1986-10-21)

## Description

The present invention relates to a system and a method for certification of the position of a tool in a machine tool, such as a milling machine.

The term "certification" means the detection of dimensional characteristics, typically length and diameter, of a tool and the accurate determination of the position of the tool, in particular the centre of the tip of the tool, in the reference system of the machine.

Document JP-A-10-138097 discloses a certification system and a method for a machine tool which comprises a head including a tool-carrier in which a tool is operatively mounted which, for a given working operation, is disposed in a predetermined direction, a control unit to which there are connected sensor means operable to provide signals indicative of the instantaneous position of the head in a reference system of the machine, and motor means operable to cause controlled movement of the head with respect to the reference system of the machine.

The system disclosed in said document comprises apparatus associated with the machine, which includes laser radiation generation means and associated detector means operable to define first and second measurement fields in which first and second laser beams extend in predetermined directions forming an angle of 90°, and processing and control means operable to cause controlled movements of the head within the said measurement fields in such a way as to cause interceptions of the said laser beams by the tool in a predetermined manner, to acquire and analyse the signals correspondingly provided by the detector means, and to generate signals or data indicative of the position of the tool in the reference system of the machine.

US-A-5 778 548 discloses a measuring machine including an articulated head which is capable of changing its angular direction.

US-A-5 880 847 discloses a method of automatically measuring the sphericity of a ball end mill on a machining device. A laser optical axis is defined along an X-axis direction. A ball end mill is fixed through a chuck to a spindle carried rotatably by a main spindle ram that can be positioned along a Z-axis direction of a spindle head, which can be itself positioned in the Y-axis direction. While rotating, the tip of the ball end mill is set using laser beams.

It is an object of the invention to provide an improved system and method for certifying the position of a tool in a machine, such as a milling machine, which allow to minimise so-called "non-transduced tool positioning errors".

This and other objects are achieved according to the invention with the system and method the salient characteristics of which are defined in attached Claims 1 and 4.

Further characteristics and advantages of the invention will become apparent from the following detailed description, given purely by way of non-limitative example with reference to the attached drawings in which:
Figure 1 shows a tool-carrier head of birotary type in which a tool is mounted;
Figure 2 is a partial schematic representation of the machine tool provided with a system for certifying the position of the tool according to the invention;
Figures 3 to 10 and 12 illustrate the tool and its movements relative to laser beams in the certification system of the invention; and
Figure 11 shows a variant embodiment of the system according to the invention.

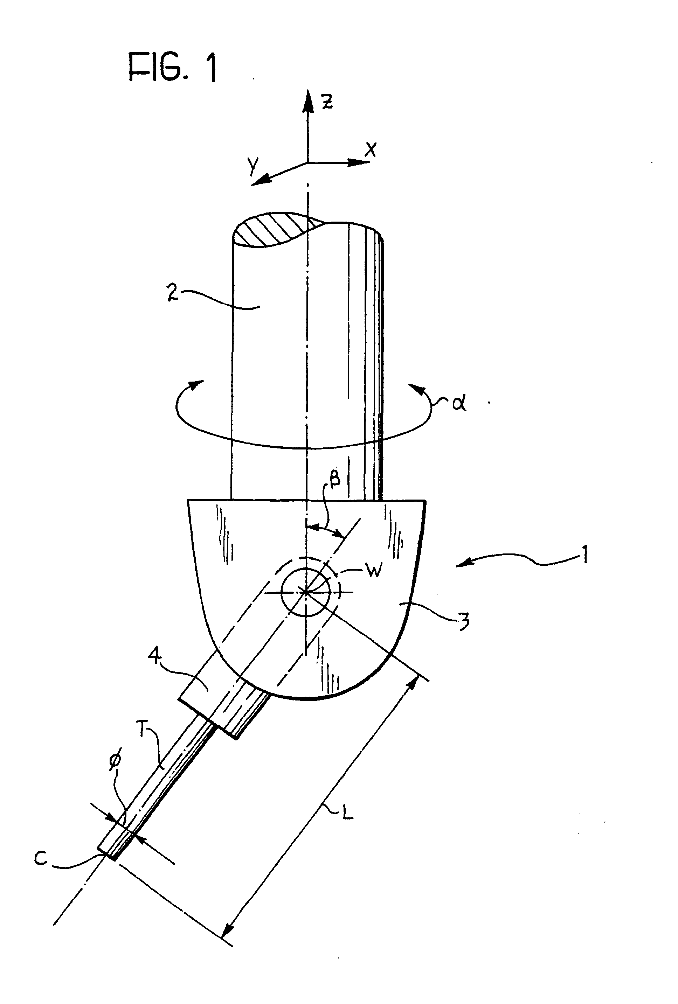

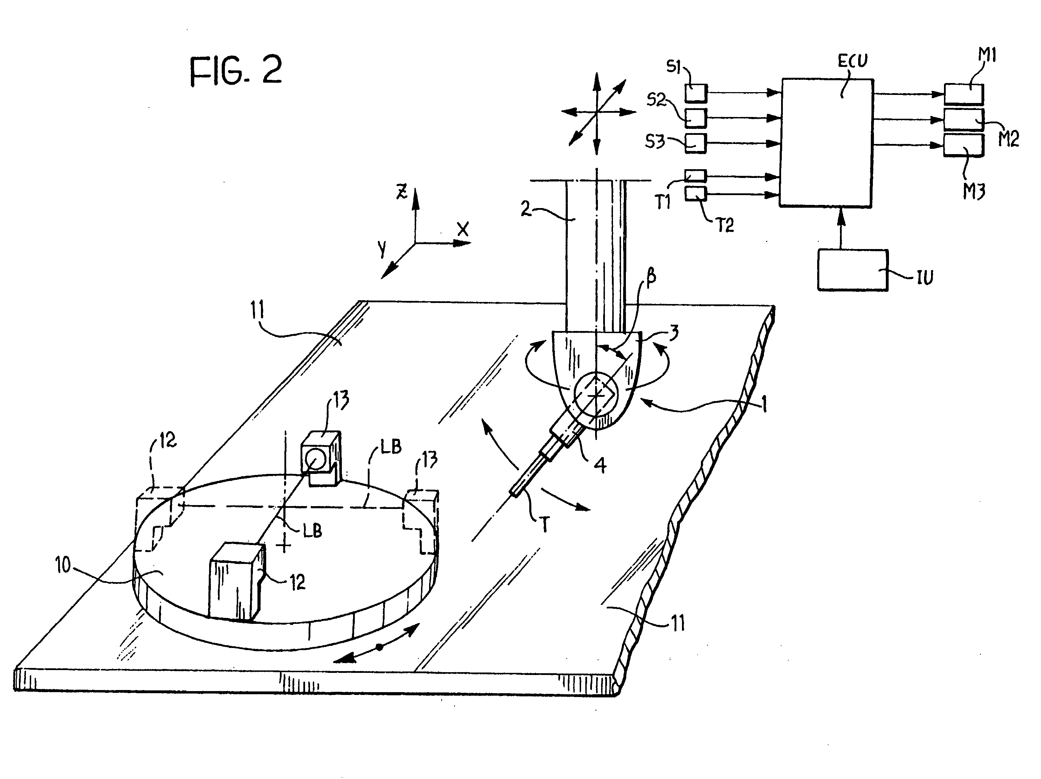

In Figures 1 and 2 the reference numeral 1 generally indicates a tool-carrier head of a machine tool such as a milling machine. The head 1. is connected for rotation about a vertical axis (Z axis) to the lower end of an arm 2 displaceable with respect to three axis (X, Y, Z) by motor devices such as those indicated M1, M2, M3 in Figure 2, controlled by a control unit ECU of the machine. To this unit are connected sensors S1, S2, S3 operable to provide it with signals generally indicative of the instantaneous position of the head 1 in the reference system of the machine.

The head 1 comprises a body 3 connected to the arm 2 so as to be rotatable about a vertical axis. To the body 3 is connected a tool-carrier 4 which is rotatable with respect to this body about an horizontal axis indicated W in Figure 1.

A tool T such as a milling tool, is operatively mounted in the tool carrier 4. The tool T has a generally cylindrical shape and its distal end can have a flat end face or be substantially hemispherical, or it may have an essentially toroidal shape etc.

In order to perform a given working operation the tool T is orientated in a predetermined direction by means of motors, not illustrated, acting to determine the angular position (angle α of Figure 1) of the body 3 of the head in the X, Y plane, as well as the angular position of the tool carrier 4 (angle β between the axis of the tool carrier and tool and the vertical). By means of corresponding transducers indicated T1 and T2 in Figure 2, the control unit ECU of the machine acquires information about the positioning of the tool which has taken place in the predetermined direction of orientation for the working operation.

The tool T has generally known nominal dimensions, in particular length and diameter, which the operator allocated to the machine can communicate to the control unit ECU thereof by means of a data entry unit (IU in Figure 2) such as a keyboard or the like.

Once the position of the head 1 with respect to the reference system X, Y, Z is known, as well as the angles α and β which define the set operative orientation of the tool T, the diameter ø of the tool and the length of this latter, or rather the distance L (Figure 1) between the tip of the tool and the axis W of rotation of the tool carrier, the control unit ECU is able to calculate the co-ordinates of the centre C (Figure 1) of the tip of the tool T in the X, Y, Z reference system of the machine.

The position of the centre C as thus calculated by the control unit ECU can however differ, even if only a little, from the real position of the centre of the tool due to different reasons such as those indicated in the introduction to the present specification.

To allow certification of the position of the tool T, according to the invention the machine tool has associated therewith apparatus such as that which will now be described with reference to Figure 2.

In this Figure the reference numeral 10 indicates a rotary table mounted so as to be continuously rotatable or indexed in a plane parallel to the work table or bed 11 of the machine tool.

To the table 10 are fixed, in facing positions, a source 12 of laser radiation and an associated detector 13. In operation the source 12 sends a laser beam LB towards the detector 13. This beam is preferably focused at an intermediate point between the source and the detector.

The source 12 and the detector 13 are conveniently connected to a control unit which may advantageously be the same control unit ECU of the machine tool. This control unit may possibly be further connected to a position sensor operable to provide the unit with information about the angular position of the table 10, that is to say the position of the beam LB. The detector device 13 is connected to the associated control unit, and this latter is able to detect a condition of interception of the beam LB by examining the signal provided by this device.

A fundamental supposition is that the geometric position of the laser beam is known to the control unit ECU.

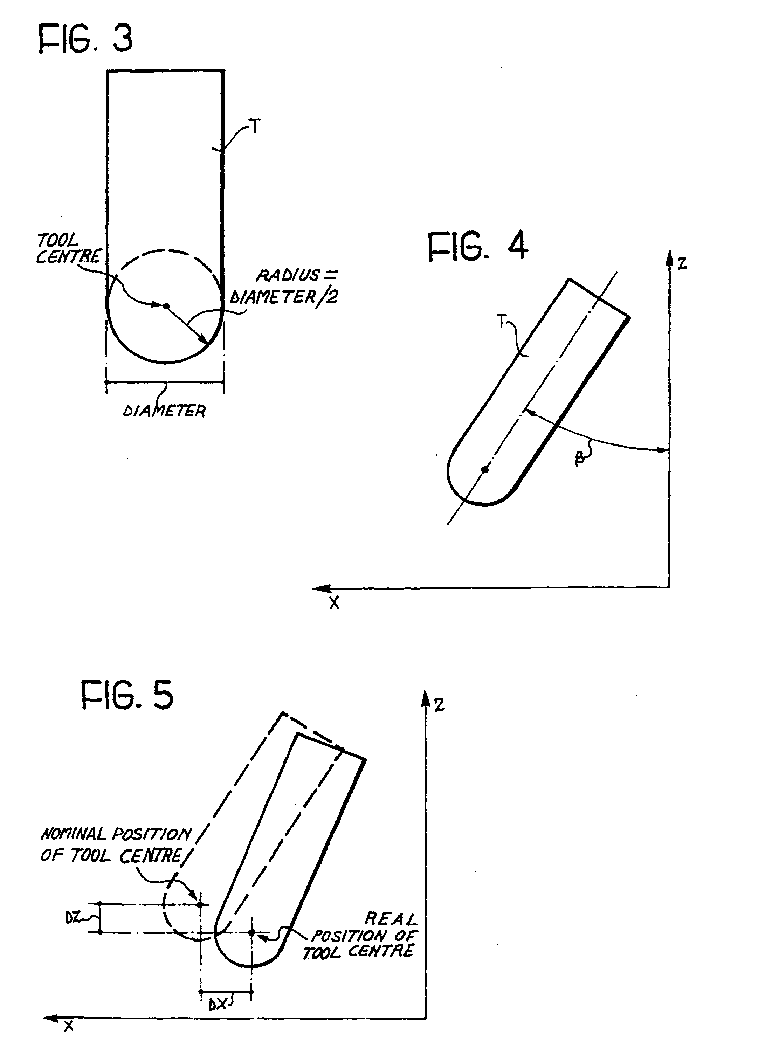

Supposing that, for a given predetermined working operation the tool T, which in an exemplary but non-limitative manner may be supposed to have a hemispherical end as illustrated in Figure 3, is orientated in a direction parallel to the X, Z plane and forming an angle β with respect to the vertical (Figure 4) the certification of the position of the tool can for example be achieved in the following manner.

It is supposed that the geometric dimensions (length and diameter) of the tool T under examination are already known (because they have been previously measured or manually entered).

It is to be noted that, because of the said errors, the control unit ECU supposes that the centre of the tool is positioned in a given position X, Y, Z whereas this in reality is not the case. Figure 5 shows the discrepancy between the nominal position in which the unit ECU presupposes the tool to be created and the real position. In Figure 5, DX and DZ represent the positioning errors respectively along the X and Z axes. Obviously, in general there is also an error DY not shown in Figure 5.

### Step 1

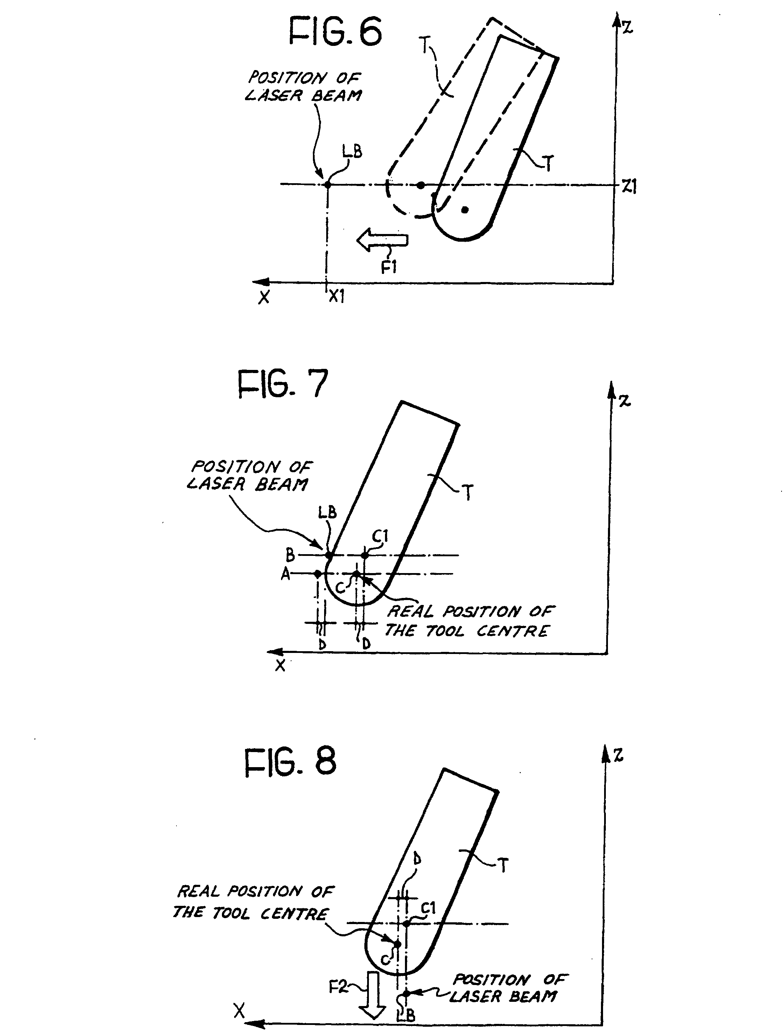

The table 10 is positioned in such a way that the laser beam LB extends parallel to the Y axis of the reference system of the machine, that is to say perpendicular to the first intercepting movement which it is desired to perform (in the X direction). The machine's control unit ECU then causes a controlled displacement of the head 1 such as to bring the tool T into a known position close to the laser beam LB, for example to the position shown in Figure 6.

In this position the unit ECU presumes that the centre of the tool is at the same height Z as the laser beam. In reality this is not so because of the errors illustrated in Figure 5.

Starting from this known position the control unit ECU causes a displacement of the tool T in the direction of the laser beam LB along the axis X as indicated by the arrow F1 of Figure 6, until the tool intercepts the beam at a point B of its generatrix. The interception condition is detected by the control unit by analysing the signal provided by the detector device 13. The control unit ECU acquires and memorises the measurement of the position of the tool in the displacement direction (X).

It is must be noted that the interception takes place at a point B of the tool which is situated at a distance D from the point A at which the control unit ECU presumes it to have intercepted the laser beam (Figure 7).

The geometric dimensions of the tool being known, and presupposing it to have interrupted the laser beam at the point A of the tool, the control unit ECU determines the "real" position of the centre of the tool, "real" in that it would have to differ from the value DX (Figure 5) with respect to that hypothesised by the control unit.

In reality the calculated point will not be C (the real position of the tool centre) but rather C1 (as illustrated in Figure 7). At this point the control unit ECU will presume that it has calculated the exact position of the tool centre along the axis X and stores it.

### Step 2

The control unit ECU can then determine the position of the tool T in a known position, such as that shown in Figure 8, in which it presumes the position of the centre C of the tool to be at the same height X as the laser beam LB. In reality the point C1 would be aligned with the axis of the laser beam LB for reasons previously described and illustrated.

Starting from this initial position the unit then causes displacement of the tool in the direction of the arrow F2 (Figure 8; decreasing Z direction) until intercepting the beam, and acquires and memorises the position along the Z axis at which this interception occurs.

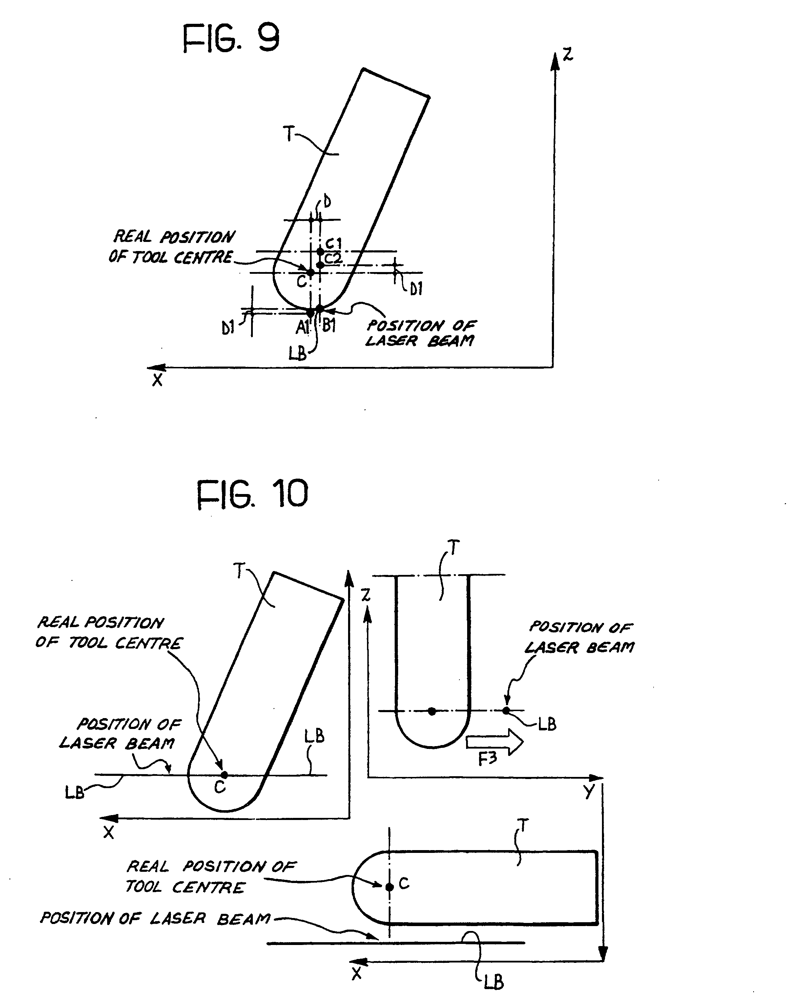

It must be noted (Figure 9) that the interception takes place at a point B1 of the tool, which is situated at a distance D1 from the point A1 at which the control unit ECU assumes the laser beam was intercepted.

The geometric dimensions of the tool being known, and presupposing that the laser beam has been interrupted at the point A1 of the tool, the control unit ECU determines the "real" position of the tool centre; "real" in that it will be different from the value DZ (Figure 5) with respect to that hypothesised by the control unit.

In reality the calculated point will not be C (real position of the tool centre) but rather C2 (as illustrated in Figure 9). At this point the control unit ECU will presume that it has calculated the exact value of the position of the tool centre in the Z direction and stores it.

At this point the control unit ECU has determined the position of the tool centre in a more precise manner than in Figure 5 with respect to the associated errors DX and DZ.

It can be shown mathematically (D1 being less than D) that by now repeating the procedure starting from step 1 the cycle converges towards an ever more precise solution. The cycle terminates when a satisfactory precision has been achieved delimited by a minimum admissible error in the variation of the associated variables D and D1 upon successive iterations.

Thanks to the information achieved with the above-described operations, the control unit is able to verify and possibly correct the co-ordinates of the centre of the tip of the tool in relation to the X, Z axis.

### Step 3

The certification procedure then envisages that the Table 10 is turned in such a way as to dispose the laser beam LB along a new predetermined direction, advantageously at 90° to the preceding direction. In this condition the source 12, the receiver 13 and the laser beam LB are disposed as illustrated in broken outline in Figure 2.

### Step 4

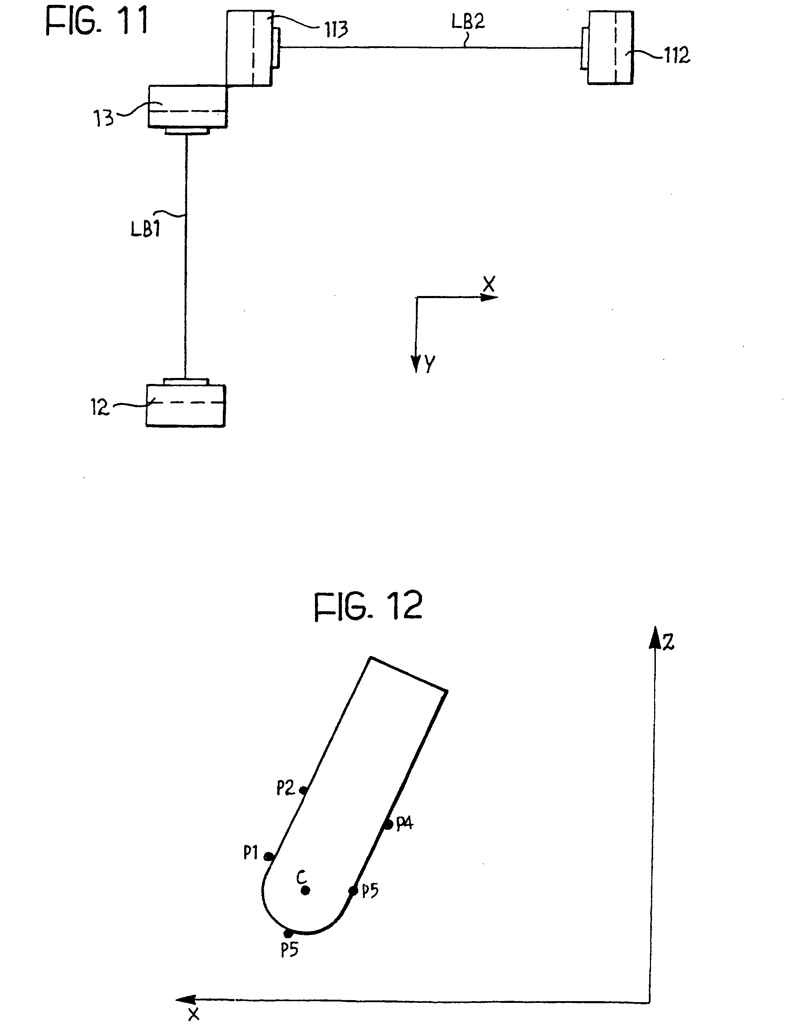

The control unit now determines the position of the tool T in a known position close to the beam LB such as that illustrated in the three views of Figure 10.

It is to be noted that in Step 4, following the operations completed in steps 1 and 2, the tool centre is effectively positioned at the height Z of the laser beam LB.

Starting from this position, and by means of controlled displacements of the tool T until intercepting the laser beam LB, and acquisition of the movements thus made, the control unit is able to verify if the effective orientation of the axis of the tool and the position of the tool relative to the axis correspond or not to the previously calculated value on the basis of the geometric parameters of the system. If this is the case, the unit ECU can perform suitable corrections, in such a way that the centre C of the tool is effectively located at a predetermined position to start working.

As an alternative to the embodiment shown in Figure 2, the certification system according to the invention can be formed using two laser sources such as the sources 12 and 112 of Figure 11, and associated detectors 13 and 113 respectively facing them. The arrangement of the said sources and associated detectors is such that the respective laser beams LB1 and LB2 in Figure 11 extend in two directions forming an angle with one another preferably of 90°.

However, other arrangements of the sources and detected can be adopted in place of that shown by way of example in Figure 11.

Naturally, the same object of the application (identification of the real position of the tool centre) can be obtained by different procedures performed to generate apparently different, but substantially equivalent, results from those just described. For example, by taking measurements in the positions P1, P2, P3, P4, P5 of Figure 12 the control unit ECU would be able to determine not only the values of DX and DZ of Figure 5, but also the values Dα and Dβ of the positions of the head's rotational axis. Obviously DX and DZ are also a consequence of such errors Dα and Dβ. The calculation of Dα and Dβ to correct them or directly to consider the errors committed by the mechanical system within the control unit ECU are therefore not to be considered as a trivial variation of the invention described here. In fact, this procedure has still the same ultimate object of the identification of the real position of the tool centre.

Naturally, the principle of the invention remaining the same, the embodiments and details of contstruction can be widely varied with respect to what has been described and illustrated purely by way of non-limitative example, without by this departing from the ambit of the invention as defined in the attached claims.

## Claims

1. A system for certifying a tool (T) of a machine tool which comprises
a head (1) including a tool carrier (4) in which a tool (T) is operatively mounted, which for a given predetermined working operation is disposed in a predetermined direction detectable by transducer means (T1, T2) associated with the head (1) and connected to a control unit (ECU) of the machine to which there are also connected sensor means (S1-S3) operable to provide signals indicative of the instantaneous position of the head (1) in a reference system (X, Y, Z) of the machine, and
motor means operable to cause controlled movement of the said head (1) with respect to the reference system (X, Y, Z) of the machine;
the system including apparatus associated with the ma-. chine, which includes
laser radiation generator means (12; 112) and associated detector means (13; 113) operable to define first and second measurement fields in which respective first and second laser beam (LB; LB1, LB2) extend in respective predetermined directions forming an angle, preferably of 90°, and
processing and control means (ECU) operable to cause control movements of the head (1) within the said measurement fields in such a way as to cause interceptions of the said laser beams (LB; LB1, LB2) by the tool (T) in a predetermined manner, to acquire and analyse signals correspondingly provided by the said detector means (13; 113), and to generate signals or data indicative of the position of the tool (T) in the reference system (X, Y, z) of the machine;
the control unit (ECU) being predisposed to perform predetermined steps including
- calculating the coordinates of a presumed position of the tool tip centre (C) in the reference system (X, Y, Z) of the machine on the basis of known geometrical dimensions (φ, L) of the tool (T) and the information provided by the transducer means (T1, T2) and the sensor means (S1-S3);
- causing a first displacement of the head (1) along a first coordinates axis (X) from a first starting position in which the tool (T) does not intercept the laser beam (LB) and in which one first coordinate (Z) of said presumed position of the tool tip centre equals that of the laser beam (LB), said first coordinate (Z)- being measured along a second coordinate axis (Z) different from said first coordinate axis (X), and acquiring and storing the position of the tool (T) along said first coordinate axis (X) at which the tool (T) intercepts the beam (LB), and recalculating the presumed position of the tool tip centre (C) taking into account said acquired and stored position of the tool (T) along said first coordinate axis (X); and
- causing a second displacement of the head (1) along said second coordinate axis (Z) from a -second starting position in , which the tool does not intercept the laser beam (LB) and in which said first coordinate (X) of the current presumed, calculated position of the tool tip centre (C1) equals that of the laser beam (LB), and acquiring and storing the position of the tool (T) along said second coordinate axis (Z) at which the tool (T) intercepts the beam (LB) and recalculating the position of the tool tip centre (C2) taking into account said acquired and stored position of the tool (T) along said second coordinate axis (Z).

2. A system according to Claim I, in which the said generator means and the said detector means comprise a laser source (12) and, respectively, a detector (13) mounted facing one another on a support structure (10) rotatable with respect to the working plane (11) of the machine and able to assume at least first and second positions in which the beam (LB) emitted by the source (12) extends respectively in first and second directions forming an angle, preferably of 90° with respect to one another.

3. A system according to Claim 1, in which the said generator means and the said detector means comprise first and second laser sources, detector pairs (12, 13; 112; 113) orientated respectively along first and second directions forming an angle preferably of 90° to one another.

4. A method for certifying a tool T in a machine tool which comprises a head (1) including a tool Carrier (4) in which a tool (T) is operatively mounted which, for a given predetermined working operation is disposed in a predetermined direction detectable by transducer means (T1, T2) associated with the head (1) and connected to a control unit (ECU) to which there are also connected sensor means (S1-S3) operable to provide signals indicative of the instantaneous position of the head (1) in a reference system (X, Y, Z) of the machine, and
motor means (M1, M2, M3) operable to cause controlled movement of the said head (1) in the reference system (X, Y, Z) of the machine;
the method comprising the operations of generating in the working field of the machine, first and second laser beams (LB; LB1, LB2) which extend in respective predetermined directions forming an angle preferably of 90° to one another;
detecting by detector means (13; 113) the said first and second laser beam (LB; LB 1, LB2) respectively; and
causing controlled movements of the head (1) in such a way as to cause the tool (T) to intercept the said laser beams (LB; LB1; LB2) in a predetermined manner,
acquiring and analysing' the signals correspondingly provided by the said detector means (13; 113) to generate signals or data indicative of the geometry and position of the tool (T) in the reference system (X, Y, Z) of the machine;
the method including
- calculating by means of the control unit (ECU) the coordinates of a presumed position of the tool tip centre (C) in the reference system (X, Y, Z) of the machine on the basis of known geometrical dimensions (φ, L) of the tool (T) and the information provided by the transducer means (T1, T2) and the sensor means (S1-S3);
- causing a first displacement of the head (1) along a first coordinates axis (X) from a first starting position in which the tool (T) does not intercept the laser beam (LB) and in which one first coordinate (Z) of said presumed position of the tool tip centre equals that of the laser beam (LB), said first coordinate (Z) being measured along a second coordinate axis (Z) different from said first coordinate axis (X), and acquiring and storing the position of the tool (T) along said first coordinate axis (X) at which the tool (T) intercepts the beam (LB), and recalculating the presumed position of the tool tip centre (C) taking into account said acquired and stored position of the tool (T) along said first coordinate axis (X); and
- causing a second displacement of the head (1) along said second coordinate axis (Z) from a second starting position in which the tool (T) does not intercept the laser beam (LB) and in which said first coordinate (X) of the current presumed, calculated position of the tool tip centre (C1) equals that of the laser beam (LB), and acquiring and storing the position of the tool (T) along said second coordinate axis (Z) at which the tool (T) intercepts the beam (LB) and recalculating the position of the tool tip centre (C2) taking into account said acquired and stored position of the tool (T) along said second coordinate axis (Z).

5. A method according to Claim 4, in which a single laser light source (12) is utilised and an associated receiver (13) which can be located in two different relative positions in which the beam emitted by the source (12) extends in a first and a second direction respectively.

6. A method according to Claim 4, in which two source-detector pairs (12, 13; 112, 113) are utilised, disposed in respective positions such that the respective laser beams (LB1, LB2) extend along first and second directions respectively forming an angle preferably of 90° to one another.

## Patentansprüche

1. System zur Bestätigung eines Werkzeugs (T) einer Werkzeugmaschine, wobei das System enthält:
einen Kopf (1), der einen Werkzeugträger (4) aufweist, in dem ein Werkzeug (T) betriebsmäßig angebracht ist, das für einen vorgegebenen Arbeitsgang in einer vorgegebenen Richtung angeordnet ist, die von Wandlereinrichtungen (T1, T2) abgetastet werden kann, die dem Kopf (1) zugeordnet sind und die mit einer Steuereinheit (ECU) der Maschine verbunden sind, mit der auch Fühlereinrichtungen (S1-S3) betriebsmäßig verbunden sind, um Signale zu liefern, die die momentane Stellung des Kopfs (1) in einem Bezugssystem (X, Y, Z) der Maschine angeben, und
eine Motoreinrichtung, die in Betrieb gesetzt werden kann, um eine gesteuerte Bewegung des Kopfs (1) im Hinblick auf das Bezugssystem (X, Y, Z) der Maschine hervorzurufen;
wobei das System eine Vorrichtung aufweist, die der Maschine zugeordnet ist und die enthält .
eine Laserstrahlgenerator-Einrichtung (12; 112) und eine zugeordnete Detektoreinrichtung (13; 113), die in Betrieb stehen, um ein erstes und ein zweites Messfeld festzulegen, in dem der erste bzw. der zweite Laserstrahl (LB; LB1, LB2) in entsprechende vorgegebene Richtungen verlaufen, die miteinander einen Winkel einschließen, vorzugsweise von 90°, und
eine Prozessor/Steuer-Einheit (ECU), die in Betrieb gesetzt werden kann, um innerhalb der Messfelder Steuerbewegungen des Kopfs (1) so hervorzurufen, dass Unterbrechungen der Laserstrahlen (LB; LB1, LB2) durch das Werkzeug (T) auf vorgegebene Art hervorgerufen werden, um Signale herzuleiten und zu analysieren, die von der Detektoreinrichtung (13; 113) entsprechend geliefert werden, und um Signale oder Daten zu erzeugen, die die Stellung des Werkzeugs (T) im Bezugssystem (X, Y, Z) der Maschine angeben;
wobei die Steuereinheit (ECU) so voreingestellt ist, um vorgegebene Schritte auszuführen, die aufweisen
- berechnen der Koordinaten einer vorausgesetzten Stellung der Werkzeugspitzen-Mitte (C) im Bezugssystem (X, Y, Z) der Maschine aufgrund von bekannten geometrischen Abmessungen (Ø, L) des Werkzeugs (T) sowie einer Information, die von den Wandlereinrichtungen (T1, T2) und den Fühlereinrichtungen (S1-S3) geliefert wird;
- hervorrufen einer ersten Auslenkung des Kopfs (1) entlang einer ersten Koordinatenachse (X) von einer ersten Ausgangsstellung, in der das Werkzeug (T) den Laserstrahl (LB) nicht unterbricht und in der eine erste Koordinate (Z) der vorausgesetzten Stellung der Werkzeugspitzen-Mitte gleich der Stellung des Laserstrahls (LB) ist, wobei die erste Koordinate (Z) entlang einer zweiten Koordinatenachse (Z) gemessen wird, die sich von der ersten Koordinatenachse (X) unterscheidet, sowie herleiten und speichern der Stellung des Werkzeugs (T) entlang der ersten Koordinatenachse (X), an der das Werkzeug (T) den Strahl (LB) unterbricht, und neu berechnen der vorausgesetzten Stellung der Werkzeugspitzen-Mitte (C) unter Berücksichtigung der hergeleiteten und gespeicherten Stellung des Werkzeugs (T) entlang der ersten Koordinatenachse (X); und
- hervorrufen einer zweiten Auslenkung des Kopfs (1) entlang der zweiten Koordinatenachse (Z) von einer zweiten Ausgangsstellung, in der das Werkzeug den Laserstrahl (LB) nicht unterbricht und in der die erste Koordinate (X) der momentanen vorausgesetzten, berechneten Stellung der Werkzeugspitzen-Mitte (C1) gleich der Stellung des Laserstrahls (LB) ist, sowie herleiten und speichern der Stellung des Werkzeugs (T) entlang der zweiten Koordinatenachse (Z), an der das Werkzeug (T) den Strahl (LB) unterbricht, und neu berechnen der Stellung der Werkzeugspitzen-Mitte (C2) unter Berücksichtigung der hergeleiteten und gespeicherten Stellung des Werkzeugs (T) entlang der zweiten Koordinatenachse (Z).

2. System gemäß Anspruch 1, wobei die Generatoreinrichtung und die Detektoreinrichtung eine Laserquelle (12) sowie einen Detektor (13) enthalten, die so angebracht sind, dass sie auf einem Tragaufbau (10) einander gegenüber liegen, der zur Arbeitsebene (11) der Maschine drehbar ist und zumindest eine erste und eine zweite Stellung einnehmen kann, in der der Strahl (LB), der von der Quelle (12) ausgesandt wird, in eine erste bzw. eine zweite Richtung verläuft, die miteinander einen Winkel einschließen, vorzugsweise von 90°.

3. System gemäß Anspruch 1, wobei die Generatoreinrichtung und die Detektoreinrichtung eine erste und eine zweite Laserquelle sowie ein Detektorpaar (12, 13; 112, 113) enthalten, die entlang einer ersten bzw. einer zweiten Richtung ausgerichtet sind, die miteinander einen Winkel einschließen, vorzugsweise von 90°.

4. Verfahren zur Bestätigung eines Werkzeugs T in einer Werkzeugmaschine, die einen Kopf (1) enthält, der einen Werkzeugträger (4) aufweist, in dem ein Werkzeug (T) betriebsmäßig angebracht ist, das für einen vorgegebenen Arbeitsgang in einer vorgegebenen Richtung angeordnet ist, die von Wandlereinrichtungen (T1, T2) abgetastet werden kann, die dem Kopf (1) zugeordnet sind und die mit einer Steuereinheit (ECU) verbunden sind, mit der auch Fühlereinrichtungen (S1-S3) betriebsmäßig verbunden sind, um Signale zu liefern, die die momentane Stellung des Kopfs (1) in einem Bezugssystem (X, Y, Z) der Maschine angeben, sowie
eine Motoreinrichtung (M1, M2, M3) enthält, die in Betrieb gesetzt werden kann, um eine gesteuerte Bewegung des Kopfs (1) im Bezugssystem (X, Y, Z) der Maschine hervorzurufen,
wobei das Verfahren folgende Schritte enthält:
erzeugen eines ersten und eines zweiten Laserstrahls (LB; LB1, LB2) im Arbeitsfeld der Maschine, die jeweils in vorgegebene Richtungen verlaufen, die miteinander einen Winkel einschließen, vorzugsweise von 90°;
abtasten des ersten bzw. zweiten Laserstrahls (LB; LB1, LB2) mit der Detektoreinrichtung (13; 113); und
hervorrufen von gesteuerten Bewegungen des Kopfs (1) so, dass das Werkzeug (T) die Laserstrahlen (LB; LB1, LB2) auf vorgegebene Art unterbricht,
herleiten und analysieren der Signale, die jeweils von der Detektoreinrichtung (13; 113) geliefert werden, um Signale oder Daten zu erzeugen, die die Geometrie und die Stellung des Werkzeugs (T) im Bezugssystem (X, Y, Z) der Maschine angeben;
wobei das Verfahren aufweist:
- berechnen der Koordinaten einer vorausgesetzten Stellung der Werkzeugspitzen-Mitte (C) im Bezugssystem (X, Y, Z) der Maschine mit Hilfe der Steuereinheit (ECU) aufgrund von bekannten geometrischen Abmessungen (Ø, L) des Werkzeugs (T) sowie einer Information, die von den Wandlereinrichtungen (T1, T2) und den Fühlereinrichtungen (S1-S3) geliefert wird;
- hervorrufen einer ersten Auslenkung des Kopfs (1) entlang einer ersten Koordinatenachse (X) von einer ersten Ausgangsstellung, in der das Werkzeug (T) den Laserstrahl (LB) nicht unterbricht und in der eine erste Koordinate (Z) der vorausgesetzten Stellung der Werkzeugspitzen-Mitte gleich der Stellung des Laserstrahls (LB) ist, wobei die erste Koordinate (Z) entlang einer zweiten Koordinatenachse (Z) gemessen wird, die sich von der ersten Koordinatenachse (X) unterscheidet, sowie herleiten und speichern der Stellung des Werkzeugs (T) entlang der ersten Koordinatenachse (X), an der das Werkzeug (T) den Strahl (LB) unterbricht, und neu berechnen der vorausgesetzten Stellung der Werkzeugspitzen-Mitte (C) unter Berücksichtigung der hergeleiteten und gespeicherten Stellung des Werkzeugs (T) entlang der ersten Koordinatenachse (X); und
- hervorrufen einer zweiten Auslenkung des Kopfs (1) entlang der zweiten Koordinatenachse (Z) von einer zweiten Ausgangsstellung, in der das Werkzeug (T) den Laserstrahl (LB) nicht unterbricht und in der die erste Koordinate (X) der momentanen vorausgesetzten, berechneten Stellung der Werkzeugspitzen-Mitte (C1) gleich der Stellung des Laserstrahls (LB) ist, sowie herleiten und speichern der Stellung des Werkzeugs (T) entlang der zweiten Koordinatenachse (Z), an der das Werkzeug (T) den Strahl (LB) unterbricht, und neu berechnen der Stellung der Werkzeugspitzen-Mitte (C2) unter Berücksichtigung der hergeleiteten und gespeicherten Stellung des Werkzeugs (T) entlang der zweiten Koordinatenachse (Z).

5. Verfahren gemäß Anspruch 4, wobei eine einzige Laserlicht-Quelle (12) sowie ein zugeordneter Empfänger (13) verwendet werden, die in zwei relativen Stellungen angeordnet werden können, in denen der von der Quelle (12) ausgesandte Strahl in eine erste bzw. in eine zweite Richtung verläuft.

6. Verfahren gemäß Anspruch 4, wobei zwei Quellen/Detektor-Paare (12, 13; 112, 113) verwendet werden, die in entsprechenden Stellungen so angeordnet sind, dass die entsprechenden Laserstrahlen (LB1, LB2) entlang einer ersten bzw. einer zweiten Richtung verlaufen, die miteinander einen Winkel einschließen, vorzugsweise von 90°.

## Revendications

1. Système de certification de la position d'un outil (T) d'une machine outil qui comprend :
une tête (1) comprenant un porte-outil (4) dans lequel un outil (T) est monté en service, lequel, pour une opération d'usinage prédéterminée donnée, est disposé dans une direction prédéterminée détectable par des moyens transducteurs (T1, T2) associés à la tête (1) et connectés à une unité de commande (ECU) de la machine à laquelle sont également connectés des moyens de détection (S1-S3) pouvant fonctionner pour fournir des signaux indicatifs de la position instantanée de la tête (1) dans un système de référence (X, Y, Z) de la machine, et
des moyens moteurs pouvant fonctionner pour provoquer un déplacement contrôlé de ladite tête (1) par rapport au système de référence (X, Y, Z) de la machine ;
le système comprenant un dispositif associé à la machine, qui comprend
des moyens générateurs de rayonnement laser (12 ; 112) et des moyens détecteurs (13 ; 113) associés pouvant fonctionner pour définir des premier et deuxième champs de mesure dans lesquels des premier et deuxième faisceaux laser (LB ; LB1, LB2) respectifs s'étendent dans des directions prédéterminées respectives formant un angle, de préférence de 90°, et
des moyens de traitement et de commande (ECU) pouvant fonctionner pour provoquer des déplacements contrôlés de la tête (1) dans lesdits champs de mesure d'une manière telle à provoquer des interceptions desdits faisceaux laser (LB ; LB1, LB2) par l'outil (T) d'une manière prédéterminée, pour acquérir et analyser des signaux fournis de manière correspondante par lesdits moyens détecteurs (13 ; 113) et pour générer des données ou signaux indicatifs de la position de l'outil (T) dans le système de référence (X, Y, Z) de la machine ;
l'unité de commande (ECU) étant prévue pour exécuter des étapes prédéterminées consistant à
- calculer les coordonnées d'une position supposée du centre du bec d'outil (C) dans le système de référence (X, Y, Z) de la machine sur la base de dimensions géométriques connues (Ø, L) de l'outil (T) et les informations fournies par mes moyens transducteurs (T1, T2) et les moyens de détection (S1-S3) ;
- provoquer un premier déplacement de la tête (1) suivant un premier axe des coordonnées (X) à partir d'une position de départ dans laquelle l'outil (T) n'intercepte pas le faisceau laser (LB) et dans lequel une première coordonnée (Z) de ladite position supposée du centre du bec d'outil est égale à celle du faisceau laser (LB), ladite première coordonnée (Z) étant mesurée suivant un deuxième axe des coordonnées (Z) différent dudit premier axe des coordonnées (X) et acquérir et mémoriser la position de l'outil (T) suivant ledit premier axe des coordonnées (X) dans laquelle l'outil (T) intercepte le faisceau (LB) et recalculer la position supposée du centre du bec d'outil (C) en tenant compte de ladite position acquise et mémorisée de l'outil (T) suivant ledit premier axe des coordonnées (X) ; et
- provoquer un deuxième déplacement de la tête (1) suivant le deuxième axe des coordonnées (Z) à partir d'une deuxième position de départ dans laquelle l'outil n'intercepte pas le faisceau laser (LB) et dans laquelle ladite première coordonnée (X) de la position calculée supposée actuelle du centre du bec d'outil (C1) est égale à celle du faisceau laser (LB) et acquérir et mémoriser la position de l'outil (T) suivant ledit deuxième axe des coordonnées (Z) dans laquelle l'outil (T) intercepte le faisceau (LB) et recalculer la position du centre du bec d'outil (C2) en tenant compte de ladite position acquise et mémorisée de l'outil (T) suivant ledit deuxième axe des coordonnées (Z).

2. Système selon la revendication 1, dans lequel lesdits moyens générateurs et lesdits moyens détecteurs comprennent une source laser (12) et, respectivement, un détecteur (13) monté l'un en face de l'autre sur une structure de support (10) mobile en rotation par rapport au plan d'usinage (11) de la machine et capable d'estimer au moins des première et deuxième positions dans lesquelles le faisceau (LB) émis par la source (12) s'étend respectivement dans des première et deuxième directions formant un angle, de préférence de 90° l'une par rapport à l'autre.

3. Système selon la revendication 1, dans lequel lesdits moyens générateurs et lesdits moyens détecteurs comprennent des première et deuxième sources laser, des paires de détecteurs (12, 13 ; 112, 113) orientées respectivement suivant des première et deuxième directions formant un angle de préférence de 90° l'une par rapport à l'autre.

4. Procédé de certification de la position d'un outil (T) d'une machine outil qui comprend une tête (1) comprenant un porte-outil (4) dans lequel un outil (T) est monté en service, lequel, pour une opération d'usinage prédéterminée donnée, est disposé dans une direction prédéterminée détectable par des moyens transducteurs (T1, T2) associés à la tête (1) et connectés à une unité de commande (ECU) à laquelle sont également connectés des moyens de détection (S1-S3) pouvant fonctionner pour fournir des signaux indicatifs de la position instantanée de la tête (1) dans un système de référence (X, Y, Z) de la machine, et
des moyens moteurs (M1, M2, M3) pouvant fonctionner pour provoquer un déplacement contrôlé de ladite tête (1) par rapport au système de référence (X, Y, Z) de la machine ;
procédé comprenant les opérations consistant à
générer dans le champ d'usinage de la machine des premier et deuxième faisceaux laser (LB ; LB1, LB2) qui s'étendent dans des directions prédéterminées respectives formant un angle de préférence de 90° l'une par rapport à l'autre ;
détecter avec des moyens détecteurs (13 ; 113) lesdits premier et deuxième faisceaux laser (LB ; LB1, LB2) respectivement ; et
provoquer des déplacements contrôlés de la tête (1) d'une manière telle à forcer l'outil (T) à intercepter ledit faisceau laser (LB ; LB1 ; LB2) d'une manière prédéterminée,
acquérir et analyser les signaux fournis de manière correspondante par lesdits moyens détecteurs (13 ; 113) pour générer des données ou signaux indicatifs de la géométrie et de la position de l'outil (T) dans le système de référence (X, Y, Z) de la machine ;
procédé comprenant les opérations consistant à
- calculer au moyen de l'unité de commande (ECU) les coordonnées d'une position supposée du centre du bec d'outil (C) dans le système de référence (X, Y, Z) de la machine sur la base de dimensions géométriques connues (Ø, L) de l'outil (T) et les informations fournies par mes moyens transducteurs (T1, T2) et les moyens de détection (S1-S3) ;
- provoquer un premier déplacement de la tête (1) suivant un premier axe des coordonnées (X) à partir d'une première position de départ dans laquelle l'outil (T) n'intercepte pas le faisceau laser (LB) et dans lequel une première coordonnée (Z) de ladite position supposée du centre du bec d'outil est égale à celle du faisceau laser (LB), ladite première coordonnée (Z) étant mesurée suivant un deuxième axe des coordonnées (Z) différent dudit premier axe des coordonnées (X) et acquérir et mémoriser la position de l'outil (T) suivant ledit premier axe des coordonnées (X) dans laquelle l'outil (T) intercepte le faisceau (LB) et recalculer la position supposée du centre du bec d'outil (C) en tenant compte de ladite position acquise et mémorisée de l'outil (T) suivant ledit premier axe des coordonnées (X) ; et
- provoquer un deuxième déplacement de la tête (1) suivant ledit deuxième axe des coordonnées (Z) à partir d'une deuxième position de départ dans laquelle l'outil (T) n'intercepte pas le faisceau laser (LB) et dans laquelle ladite première coordonnée (X) de la position calculée supposée actuelle du centre du bec d'outil (C1) est égale à celle du faisceau laser (LB) et acquérir et mémoriser la position de l'outil (T) suivant ledit deuxième axe des coordonnées (Z) dans laquelle l'outil (T) intercepte le faisceau (LB) et recalculer la position du centre du bec d'outil (C2) en tenant compte de ladite position acquise et mémorisée de l'outil (T) suivant ledit deuxième axe des coordonnées (Z).

5. Procédé selon la revendication 4, dans lequel une unique source lumineuse à laser (12) est utilisée et un récepteur (13) associé qui peut être placé dans deux positions relatives différentes dans lesquelles le faisceau émis par la source (12) s'étend respectivement dans une première et une deuxième direction.

6. Procédé selon la revendication 4, dans lequel deux paires de source-détecteur (12, 13 ; 112, 113) sont utilisées, disposées dans des positions respectives telles que les faisceaux laser respectifs (LB1, LB2) s'étendent respectivement suivant des première et deuxième directions formant un angle de préférence de 90° l'une par rapport à l'autre.
